# EUROPEAN PATENT SPECIFICATION

(11) **EP 3 192 730 B1**
(45) Date of publication and mention of the grant of the patent: **25.03.2020**
(21) Application number: 16203311.2
(22) Date of filing: 06.09.2010
(51) Int. Cl.: B62K 5/00, B62K 5/08

(54) **TILT CONTROL FOR TILTING VEHICLES**
KIPPSTEUERUNG FÜR KIPPFAHRZEUGE
COMMANDE D'INCLINAISON POUR VÉHICULES BASCULEURS

(30) Priority: 08.09.2009 AU 2009904277
(43) Date of publication of application: 19.07.2017
(62) Divisional of application: 13168191.8
(73) Proprietor: Ino8 Pty Ltd, Jan Juc, Victoria 3228 (AU)
(72) Inventor: WILL, Frank, Jan Juc, Victoria 3228 (AU)
(74) Representative: Spachmann, Holger

(56) References cited:
- WO-A1-2006/050809
- WO-A2-2006/130007
- US-A- 4 351 410
- US-A1- 2007 265 746

## Description

### FIELD OF THE INVENTION

The present invention relates to tilt control for tilting vehicles.

### BACKGROUND OF THE INVENTION

Tilting vehicles are subject to overturning transversely due to transverse forces such as side wind forces, transverse gravitational force components, and centrifugal forces. Active tilt control systems have been proposed to prevent transverse overturning.

In WO 2006/130007 A2, which shows the features of the preamble of claim1, a tilting vehicle with at least two transversely spaced wheels and at least two longitudinally spaced wheels is described, wherein a frame is at least freely transversely tiltable between said wheels, A side wind sensor is provided for correcting a control or applying pressure to tilting elements for reaming a vehicle in an upright position.

Similar tilting vehicle configurations are known form US 2007/265746 A1, WO 2006/050809A1 and US 4 351 410 A.

Such systems generally include transverse actuators to force the vehicle to tilt transversely to counteract transverse forces on the vehicle. Some existing solutions comprise a mechanical brake being in a brake state or open state, a manually operated tilt control. The solution usually is just a plausibility check that doesn't comprise any sensors to measure tilt angle or tilt rate and it can be activated either manually or by using a plausibility check, for example in case of an acceleration of the vehicle. Active tilt control systems are complicated and expensive.

What is needed is a solution which addresses the above difficulties.

### SUMMARY OF THE INVENTION

According to a first aspect of the present invention, there is provided a tilting vehicle including a frame freely tiltable between at least two transversely spaced wheels, at least one variable damper with adjustable damping force operatively connected between the frame and the two wheels to counteract against at least longitudinal tilting in a steering state, at least one sensor to generate signals indicative of transverse tilting of the frame relative to a central vertical plane of the vehicle, and a controller in communication with the at least one variable damper and the at least one sensor, wherein the controller is configured to vary damping by the at least one variable damper in accordance with the signals generated by the at least one sensor to passively provide tilt stability to the frame through the force generated in the damper in the opposite direction of the damper movement. The invention suggests to damp a freely tiltable frame in accordance to a damping state for enhancing driving security and comfort of the vehicle. The anti-tilting apparatus solely comprises at least one damper, at least one sensor and a controller for controlling the damper in accordance to the sensed tilting state of the vehicle. The anti-tilting apparatus is cheap, easy to use and can be refitted to existing vehicles. In contrast to known solutions the anti-tilting apparatus does not rely on a mechanical brake or an actively operated hydraulic system using actuators such as an electro motor, oil pump, hydraulic pressure reservoir or similar. The system is automatically controlled by a controller on response of a tilting state sensed by a tilting sensor, which can be a tilt-angle sensor, a tilt-velocity or a tilt-acceleration sensor. The system is energy efficient, operates in a semi-passive mode without additional power demand for driving actuators, whereby an active change of the tilting state can be powered by the operating weight of the vehicle and the driver. Only a slight operating electric power is needed for operating the controller and some switching elements such as hydraulic or pneumatic valves. The operating power can be provided by a small battery or accumulator, thus the system can be applied to a motorized as well as a non-motorized vehicle such as a bicycle or similar.

The at least one sensor comprises at least a side wind sensor for detecting a side wind which forces a lateral inclination of the vehicle.

The controller is connected to the brake system of the vehicle to vary brake pressure by opening a by-pass valve in the brake system or by increasing the brake pressure with an active pump. In this way the controller controls tilting as well as breaking for increasing driving safety of the vehicle, for example in case one or more wheels wheel start losing traction. Additionally or alternatively the controller is connected to a powertrain control system of the vehicle to vary power and torque output from the power train to the wheels of the vehicle.

In an advantageous embodiment the one sensor can further comprise one of a tilt sensor, a tilt speed sensor, a vehicle speed sensor, a steering angle sensor, a steering angle velocity sensor, a steering angle acceleration sensor, or combinations thereof. The controller can give higher priority to the signal from the steering angle velocity sensor or the steering angle acceleration sensor than any other sensor. In this way the controller can consider signals of various sensors hierarchically, whereby signals of the steering angle velocity sensor as being crucial for driving safety have the highest priority.

The vehicle can include at least one steering damper. The steering damper can be mounted within the steering assembly. The steering damper can reduce effects of sudden steering movements of the driver thus smoothing driving behaviour and increases driving safety.

The vehicle can further include a steering assembly disposed between the frame and the two front wheels. The vehicle can further include a suspension assembly disposed between the steering assembly and the two front wheels. The vehicle can further include a transverse tilt linkage disposed between the steering assembly and the suspension assembly or between the suspension assembly and the two front wheels. The two front wheels can change their longitudinal alignment with respect to the vehicle's longitudinal axis for controlling the direction of movement. A suspension assembly can increase comfort and can reduce mechanical shocks to the vehicle's frame. A transverse tilt linkage can increase stability and rating of the vehicle's frame.

The steering assembly can be tiltably mounted relative to the at least one transverse beam to enable tilting of the vehicle. Thus the vehicle remains comfortably steerable in a tilted position. The at least one transverse beam can be operatively connected between the two front wheels and the steering assembly. Such a connection increases connection reliability between steering assembly and front wheels especially in rough driving conditions.

Alternatively, the suspension assembly can be disposed between the frame and the steering assembly. A transverse tilt linkage can be disposed between the frame and the suspension assembly or between the steering assembly and the suspension assembly. In this way the suspension assembly is in series connection with the transverse tilt linkage and can act additive to the function of the transverse tilt linkage.

Alternatively, the transverse tilt linkage can include upper and lower transverse beams articulated together by a central link, which decreases stiffness of the linkage. The central link can form part of the frame or part of the steering assembly and the link can be connected to a generally central portion of each transverse beam. The suspension assembly can include two transversely spaced suspension struts disposed between the upper and lower transverse beam and the two front wheels, which can reduce damping forces of each suspension strut. The at least one variable damper can be transversely disposed between one end of at least one transverse beam and the central link. The at least one damper can comprise two transversely disposed variable subdampers in a push-pull relationship. The two variable dampers can have adjacent facing ends articulated to the central link and opposite ends articulated to opposite ends of the transverse beam, thus increasing damping effects and reliability of the suspension assembly.

The vehicle can have at least one steering damper mounted between the steering wheel or handlebar and the frame, wherein the steering damper has a closed loop hydraulic circuit which includes a electro-rheologic fluid or a magneto-rheologic fluid and at least one electro rheologic valve or one magneto rheologic valve hydraulically connected between both sides of the at least one damper.

The controller can be configured to control bi-directional fluid flow through the at least one steering damper by controlling the position of the electro-rheologic valve or one magneto-rheologic valve to thereby vary steering damping. Thus an extension and retraction of a damper can be controlled actively by an electric or magnetic field which can be powered by the vehicle's board electric system.

The steering assembly can include a steering stem which is backwardly inclined so that an upper end of the steering stem is disposed towards the front of the vehicle. During a tilt operation an inclined steering stem reduces tilt of the steering assembly such that tilt effects are reduced.

According to the invention, two wheels are transversely spaced from each other. In this case the damper can ensure transverse stability against tilting while driving the vehicle or in a parking state. The two transversely spaced wheels define a horizontal axis being parallel to a road and define a reference axis for measuring of and counteracting against a tilting movement.

The vehicle can have at least three wheels, wherein the two wheels can be two front wheels longitudinally spaced from at least one rear wheel. The vehicle can be a Trike or a Three-wheeler, favourably a kind of three-wheeled motorcycle, electrobicycle, man-powered bicycle or similar vehicle.

The at least one variable damper can be transversely disposed between one end of the at least one transverse beam and any one of the frame, the suspension assembly and the steering assembly. In this way a relative movement of frame and transverse beam is defined through the damper movement and a mechanical variable linkage between frame and transverse beam is installed. The at least one variable damper can comprise two transversely disposed variable subdampers in a push-pull relationship. The two variable subdampers can have adjacent facing ends articulated to one end of the transverse beam and opposite ends articulated to opposite ends of any one of the frame, the suspension assembly or the steering assembly. Thus a damper relies on two counteracting subdampers which provides redundancy and enhances damping effects and operating range the damper. At least one of the two variable dampers can be hydraulically or electrically operated, thus being controllable by a hydraulic or electric controlling system. At least one of the two variable dampers can be a double-acting hydraulic damper fluidly interconnected between both sides of the damper by a closed loop hydraulic circuit, A closed loop hydraulic circuit whereby a double-acting damper is passively driven by hydraulic fluid pressurized in a corresponding chamber of the same damper or another damper features a passive tilting system without actively operated devices as an oil pump thus reducing costs and complex actively operated actuators. The closed loop hydraulic circuit can include two two-way solenoid valves fluidly connected between the at least one double-acting hydraulic damper, and a reservoir fluidly connected between the two two-way solenoid valves. The two valves can easily be controlled, whereby in a failsafe-position the valves can stay open. The controller can be configured to control bi-directional fluid flow through the hydraulic circuit such that the passive damping forces of the damper is actively controllable by the controller

The closed loop hydraulic circuit can include an electro-rheologic fluid or a magneto-rheologic fluid and at least one electro rheologic valve or at least one magneto rheologic valve hydraulically connected between both sides of the at least one damper. By controlling the rheologic characteristics of the fluid, like the viscosity, the damping characteristics can be controlled or adjusted by an electric or magnetic field thus reducing mechanical parts and increasing reliability and response time of the suspension assembly.

The suspension assembly can comprise at least one shock absorber having a closed loop hydraulic circuit which includes a electro-rheologic fluid or a magneto-rheologic fluid and at least one electro rheologic valve or one magneto rheologic valve hydraulically connected between both sides of a piston of the at least one damper or a mechanical lock out device. By controlling the rheologic characteristics of the fluid, like the viscosity, the shock absorber characteristics can be controlled or adjusted by an electric or magnetic field thus reducing mechanical parts and increasing reliability and response time of the suspension assembly.

The rear wheel can be driven by a motor. The rear wheel can be steered. Driving a rear wheel can improve traction and driving dynamic of the vehicle. A steerable rear wheel can improve steering capability of the vehicle. Driving one rear wheel is cheaper and less complex than driving two front wheels, whereby a vehicle having two transversely spaced front wheels and at least one rear wheel is an advantageous embodiment of the invention.

A solenoid activated mechanical tilting lockout can be provided to prevent tilting of the frame during parking. A fixation of the tiltable frame during parking can increase anti-theft security and can prevent damage of the vehicle. A mechanical lockout provides further redundancy in case the hydraulic system would leak after a long period without use, for example through biting attacks from animals.

According to the invention, the controller is connected to the brake system of the vehicle to vary brake pressure by opening a by-pass valve in the brake system or by increasing the brake pressure with an active pump. In this way the controller can control tilting as well as braking for increasing driving safety of the vehicle, for example in case one or more wheels wheel start loosing traction.

According to the invention, the controller is connected to a powertrain control system of the vehicle to vary power and torque output from the power train to the wheels of the vehicle. The vehicle can have at least two different powertrains connected to at least two different wheels and that the torque of each of these powertrains can be controlled independently from each other. In this way the controller can control tilting as well as wheel torque for increasing driving safety of the vehicle.

The controller can be a fuzzy controller that executes a fuzzy logic algorithm. The controller can use look-up tables to control the position of the or each damper. By using fuzzy logic and/or look up tables the controller can control the tilting state of the vehicle in an intelligent way and can optimize tilting behaviour in different driving situations, for instance when driving with low or high velocity, driving upward or downward. The controller can consider weather and road conditions like wet streets, winding roads or similar and can control more intelligent.

The at least one variable damper can provide a continuously variable damping force in both directions of movement at zero velocity of the damper with a spread of at least 10 in a range between a maximum force of 1000N and a minimum force of 100N, or in case of a rotational damper a maximum torque of at least 70Nm and a minimum torque of 7Nm. Such a variable damping force can adapt reaction of the damping system to certain parameters as tilting angle and driving condition, whereby a force being optimal to a distinct driving state can be chosen.

### BRIEF DESCRIPTION OF THE DRAWINGS

The invention will be further described by way of example only with reference to the accompanying drawings, in which:
- **Figure 1**: is a schematic of a tilting vehicle of an embodiment of the invention;
- **Figure 2**: is a schematic diagram of a tilt linkage of the vehicle;
- **Figure 3**: is a hydraulic circuit diagram of a passive tilt control system of the vehicle;
- **Figure 4**: is a schematic diagram of an alternative tilt linkage; and
- **Figure 5**: is a schematic diagram of another alternative tilt linkage.

### DETAILED DESCRIPTION

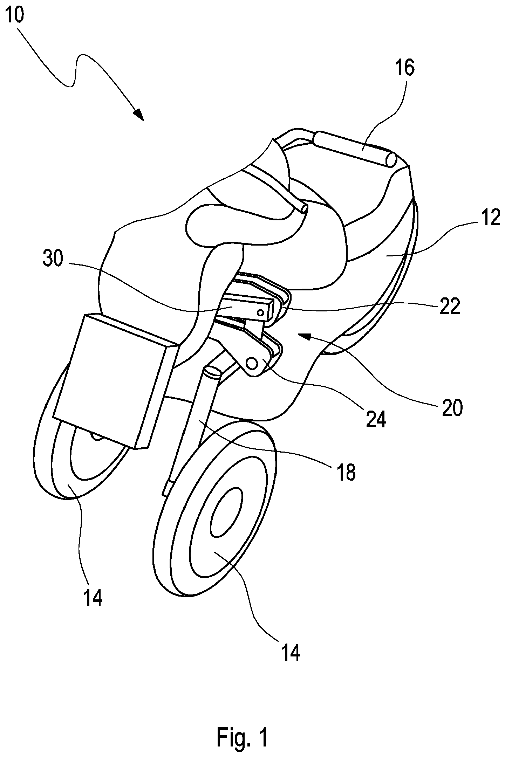

Figure 1 illustrates a tilting vehicle 10 of one embodiment of the invention. The vehicle 10 has a frame 12 manually or freely tiltable transversely between two transversely spaced front wheels 14. The vehicle 10 also has a motor-driven rear wheel not visible in Figure 1. The two front wheels 14 are steerable by a handlebar 16 connected to a steering assembly (not visible in Figure 1) disposed between the frame 12 and the two front wheels 14. The vehicle 10 also has a suspension assembly including two transversely spaced suspension struts 18 (one of which is visible in Figure 1) disposed between the steering assembly and the two front wheels 14.

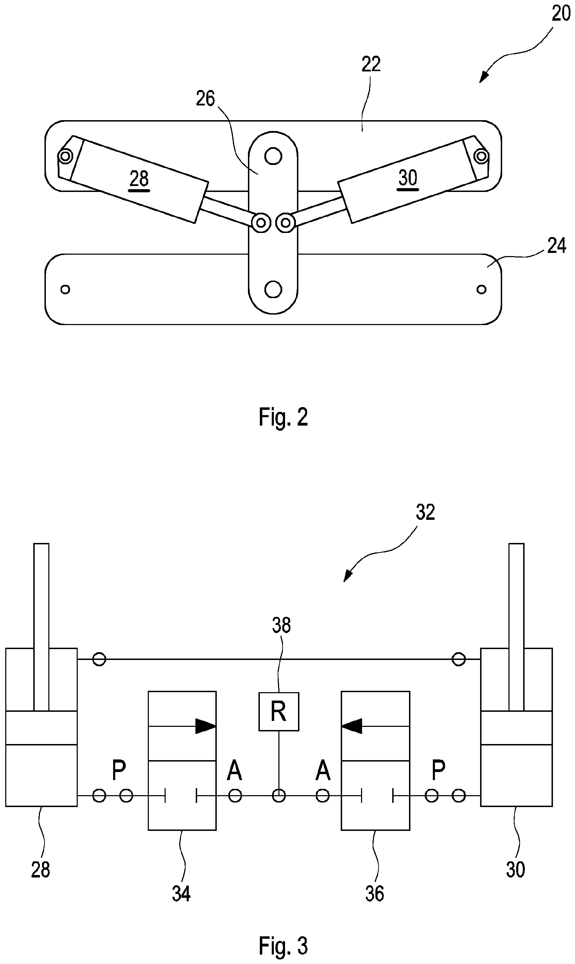

A transverse tilt linkage 20 is disposed between the steering assembly and the suspension assembly. Referring to Figure 2, the transverse tilt linkage 20 includes upper and lower transverse beams 22, 24 articulated together by a central link 26. Two double-acting hydraulic dampers 28, 30 are transversely disposed in a push-pull relationship between the upper and lower transverse beams 22, 24. The two dampers 28, 30 have adjacent facing piston ends articulated to the central link 26 and opposite cap ends articulated to opposite ends of the upper transverse beam 22. Referring again to Figure 1, the suspension struts 18 are vertically disposed between the lower transverse beam 24 and the two front wheels 14.

The two double-acting hydraulic dampers 28, 30 are fluidly interconnected by a closed loop hydraulic circuit 32 illustrated in Figure 3. The closed loop hydraulic circuit 32 includes two two-way solenoid valves 34, 36 fluidly connected between the two double-acting hydraulic dampers 28, 30, and a reservoir 38 fluidly connected between the two two-way solenoid valves 34, 36.

A controller (not shown) is provided in communication with the two two-way solenoid valves 34, 36 and sensors (not shown) for generating signals indicative of transverse tilting of the frame 12. The sensors include, for example, a tilt sensor, a vehicle speed sensor, and a steering angle sensor. The controller is configured to control bi-directional fluid flow through the two two-way solenoid valves 34, 36 to vary transverse damping by the two double-acting hydraulic dampers 28, 30 in accordance with signals generated by the sensors to passively provide transverse tilt stability to the frame 12. The controller is, for example, a fuzzy controller that executes a fuzzy logic algorithm. The fuzzy logic algorithm is, for example, based on calculated and/or measured dynamic transverse tilting characteristics of the vehicle 10.

In other embodiments (not shown), the suspension assembly is disposed between the frame and the steering assembly. According to these embodiments, a transverse tilt linkage is disposed between the frame and the suspension assembly or between the steering assembly and the suspension assembly for example.

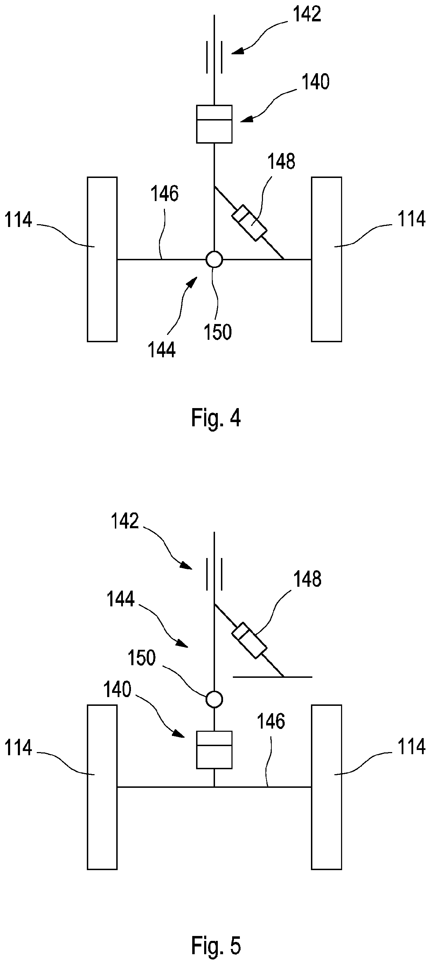

With reference to Figures 4 and 5, other embodiments of the vehicle include a tilt linkage 144 disposed between the front wheels and the steering assembly. At least one transverse beam 146 may be operatively connected between the two front wheels 114 and the steering assembly 142 as can be seen in Figure 4, or alternatively it can be connected otherwise as can be seen in Figure 5. The steering assembly 142 is tiltably connected relative to the transverse beam 146 with a bearing 150 to enable tilting of the vehicle.

At least one variable damper 148 can be transversely disposed between one end of the at least one transverse beam 146 and any one of the tilting frame (not shown), the suspension assembly 140 and the steering assembly 142, for example. Two transversely disposed variable subdampers (not shown), may for example be provided in a push-pull relationship and have adjacent facing ends articulated to one end of the transverse beam 146 and opposite ends articulated to opposite ends of any one of the tilting frame (not shown), the suspension assembly 140 or the steering assembly 142. The two subdampers act as one damper.

At least one of the variable dampers may, for example, be a double-acting hydraulic damper fluidly interconnected between both sides of the piston by a closed loop hydraulic circuit. The closed loop hydraulic circuit includes, for example, two two-way solenoid valves fluidly connected between the two double-acting hydraulic dampers, and a reservoir fluidly connected between the two two-way solenoid valves. The closed loop hydraulic circuit includes, for example, an electro-rheologic fluid or a magneto-rheologic fluid and at least one electro rheologic valve or one magneto rheologic valve hydraulically connected between both sides of at least one damper piston.

The controller (not shown) is configured to control bi-directional fluid flow through the two two-way solenoid valves or the electro rheologic valve or one magneto rheologic valve to thereby vary transverse damping by at least one double-acting hydraulic damper.

The at least one further sensor (not shown) is selected from, for example, a tilt sensor, a tilt speed sensor, a vehicle speed sensor, a steering angle sensor, a steering angle velocity sensor, a steering angle acceleration sensor or combinations thereof.

In some embodiments, the controller gives higher priority to the signal from the steering angle velocity sensor or the steering angle acceleration sensor than any other sensor.

The suspension assembly 140 may, for example, comprise at least one shock absorber (not shown) having a closed loop hydraulic circuit which includes, for example, a electro-rheologic fluid or a magneto-rheologic fluid and at least one electro rheologic valve or one magneto rheologic valve hydraulically connected between both sides of a piston of the at least one damper or a mechanical lock out device (not shown).

In some embodiments, the vehicle includes at least one steering damper. The steering damper may be mounted within the steering assembly, for example. In some embodiments, the steering damper of the vehicle, or a vehicle with only two wheels with at least one steering damper mounted between the steering wheel or handlebar and the frame, has a closed loop hydraulic circuit which includes a electro-rheologic fluid or a magneto-rheologic fluid and at least one electro rheologic valve or one magneto rheologic valve hydraulically connected between both sides of the at least one damper.

In some embodiments, the controller (not shown) may be configured to control bi-directional fluid flow through the steering damper by controlling the position of the electro-rheologic valve or one magneto-rheologic valve to thereby vary steering damping by at least one double-acting hydraulic damper.

In some embodiments, the rear wheel is driven by a motor. In other embodiments, the rear wheel can be steered to simplify the tilting mechanism of the vehicle.

In some embodiments, the steering assembly includes a steering stem which is backwardly inclined so that an upper end of the steering stem is disposed towards the front of the vehicle.

In some embodiments, a mechanical tilting lockout (not shown) may be provided to prevent tilting of the frame during parking. The mechanical tilting lockout may, for example, by activated by a solenoid.

In some embodiments, the controller is connected to the brake system (not shown) of the vehicle and to vary brake pressure by opening a by-pass valve in the brake system or by increasing the brake pressure with an active pump.

In some embodiments, the controller (not shown) is connected to a powertrain control system of the vehicle to vary power and torque output from the power train to the wheels of the vehicle. The vehicle can have at least two different powertrains connected to at least two different wheels and that the torque of each of these powertrains can be controlled independently from each other.

In some embodiments, the controller (not shown) is a fuzzy controller that executes a fuzzy logic algorithm. In some embodiments the controller uses look-up tables to control the position of the or each damper.

In other embodiments, the variable damper provides, for example, a continuously variable damping force in both directions of movement at zero velocity of the damper with a spread of at least 10 in a range between a maximum force of 1000N or higher and a minimum force of 100N or lower, or in case of a rotational damper a maximum torque of at least 70Nm or more and a minimum torque of 7Nm or less.

In other not claimed embodiments, the tilting vehicle includes a frame freely tiltable transversely between at least two longitudinally spaced wheels. The vehicle includes at least one variable damper with adjustable damping force operatively connected between the frame and the at least two wheels, at least one sensor to generate signals indicative of transverse tilting of the frame relative to a central vertical plane of the vehicle, and a controller in communication with the at least one variable damper and the at least one sensor. The controller is configured to vary transverse damping by the at least one variable damper in accordance with the signals generated by the at least one sensor to passively provide transverse tilt stability to the frame through the force generated in the damper in the opposite direction of the damper movement.

In this embodiment, the vehicle can further include at least one steering damper, the steering damper having a closed loop hydraulic circuit which includes a electro-rheologic fluid or a magneto-rheologic fluid and at least one electro rheologic valve or one magneto rheologic valve hydraulically connected between both sides of the at least one damper.

Embodiments of the invention passively provide tilting vehicles with transverse tilt stability, and thereby obviate the necessity of complicated and expensive active tilt control systems.

The embodiments have been described by way of example only and modifications are possible within the scope of the claims which follow. For example, the at least one damper may be electrical or pneumatic. The at least one damper may also be rotational.

## Claims

1. A tilting vehicle (10) including a frame (12) freely transversely tiltable between at least two transversely spaced wheels (14, 114), at least one variable damper (28, 30, 148) with adjustable damping force operatively connected between the frame (12) and the two wheels (14, 114), at least one sensor to generate signals indicative of transverse tilting of the frame (12) relative to a central vertical plane of the vehicle, and a controller in communication with the at least one variable damper (28, 30, 148) and the at least one sensor, wherein the controller is configured to vary transverse damping by the at least one variable damper (28, 30, 148) in accordance with the signals generated by the at least one sensor to passively provide transverse tilt stability to the frame (12) through the force generated in the damper in the opposite direction of the damper movement, and wherein the at least one sensor is a side wind sensor **characterized by** that the controller is connected to the brake system of the vehicle to vary brake pressure by opening a by-pass valve in the brake system or by increasing the brake pressure with an active pump and/or the controller is connected to a powertrain control system of the vehicle to vary power and torque output from the power train to the wheels of the vehicle (10).

2. A tilting vehicle (10) according to claim 1 **characterized by** said sensor comprises furthermore a tilt sensor, a tilt speed sensor, a vehicle speed sensor, a steering angle sensor, a steering angle velocity sensor, a steering angle acceleration sensor or a combinations thereof, whereby the controller gives higher priority to the signal from the steering angle velocity sensor or the steering angle acceleration sensor than any other sensor.

3. A tilting vehicle (10) according to claim 1 or claim 2 **characterized by** a suspension assembly (140) being disposed between the frame (12) and a steering assembly (142) for steering two transversely spaced front wheels (14, 114) whereby at least one rear wheel is longitudinally spaced thereof.

4. A vehicle according to claim 3, **characterized by** the suspension assembly (140) comprises at least one shock absorber having a closed loop hydraulic circuit (32) which includes an electro-rheologic fluid or a magneto-rheologic fluid and at least one electro rheologic valve or one magneto rheologic valve hydraulically connected between both sides of a piston of the at least one damper (28, 30, 148) or a mechanical lock out device.

5. A tilting vehicle (10) according to claim 3 or 4, further including a transverse tilt linkage (20) disposed between the frame (12) and the suspension assembly (140) or between the steering assembly (142) and the suspension assembly (140).

6. A tilting vehicle (10) according to claim 5, **characterized by** the steering assembly (142) is tiltably mounted relative to at least one transverse beam (146) to enable tilting of the vehicle (10), and the at least one transverse beam (146) is operatively connected between the two front wheels (14, 114) and the steering assembly (142), or the transverse tilt linkage (20) includes upper and lower transverse beams (22, 24) articulated together by a central link (26), whereby preferably the central link (26) forms part of the frame (12) or part of the steering assembly (142) and the link is connected to a generally central portion of each transverse beam (22, 24), and whereby preferably the suspension assembly (140) includes two transversely spaced suspension struts (18) disposed between the upper and lower transverse beam (22, 24) and the two front wheels (14, 114).

7. A tilting vehicle (10) according to claim 6, **characterized by** the at least one variable damper (28, 30, 148) is transversely disposed between one end of the at least one transverse beam (146) and any one of the frame (12), the suspension assembly (140) and the steering assembly (142), and preferably the least one variable damper (28, 30, 148) comprises two transversely disposed variable subdampers in a push-pull relationship, whereby at least one of the two variable subdampers is a double-acting hydraulic damper fluidly interconnected between both sides of the damper by a closed loop hydraulic circuit and the closed loop hydraulic circuit (32) includes two two-way solenoid valves (34, 36) fluidly connected between the at least one double-acting hydraulic damper (28, 30, 148), and a reservoir fluidly connected between the two two-way solenoid valves (34, 36), whereby the controller is configured to control bi-directional fluid flow through the hydraulic circuit (32) and the closed loop hydraulic (32) circuit includes an electro-rheologic fluid or a magneto-rheologic fluid and at least one electro rheologic valve or at least one magneto rheologic valve hydraulically connected between both sides of the at least one damper (28, 30, 148).

8. A vehicle according to claim 6, **characterized by** the at least one variable damper (28, 30, 148) is transversely disposed between one end of at least one transverse beam (22, 24) and the central link (26), and whereby the at least one variable damper (28, 30, 148) comprises two transversely disposed variable subdampers in a push-pull relationship, and whereby the two variable subdampers have adjacent facing ends articulated to the central link (26) and opposite ends articulated to opposite ends of the transverse beam (22, 24).

9. A vehicle according to claim 8, **characterized by** at least one of the two variable subdampers is hydraulically or electrically operated, and whereby preferably at least one of the two variable subdampers is a double-acting hydraulic damper fluidly interconnected between both sides of the damper by a closed loop hydraulic circuit.

10. A vehicle according to claim 9, **characterized by** a closed loop hydraulic circuit (32) includes two two-way solenoid valves (34, 36) fluidly connected between the at least one double-acting hydraulic damper (28, 30, 148), and a reservoir fluidly connected between the two two-way solenoid valves (34, 36), whereby preferably the controller is configured to control bi-directional fluid flow through the hydraulic circuit (32), and whereby preferably the closed loop hydraulic (32) circuit includes an electro-rheologic fluid or a magneto-rheologic fluid and at least one electro rheologic valve or at least one magneto rheologic valve hydraulically connected between both sides of the at least one damper (28, 30, 148).

11. A tilting vehicle (10) according to one of the foregoing claims **characterized by** a steering damper being mounted within the steering assembly (142) between a steering wheel or handlebar (16) of the steering assembly (142) and the frame (12),.

12. A tilting vehicle (10) according to claim 11, **characterized by** the steering damper has preferably a closed loop hydraulic circuit (32) which includes an electro-rheologic fluid or a magneto-rheologic fluid and at least one electro rheologic valve or one magneto rheologic valve hydraulically connected between both sides of the at least one steering damper, whereby the controller is configured to control bi-directional fluid flow through the at least one steering damper by controlling the position of the electro-rheologic valve or one magneto-rheologic valve to thereby vary steering damping.

13. A tilting vehicle (10) according to claim 3, **characterized by** a steering assembly (142) disposed between the steering frame (12) and two front wheels (14, 114), the steering assembly (142) includes a steering stem which is backwardly inclined so that an upper end of the steering stem is disposed towards the front of the vehicle (10).

14. A tilting vehicle (10) according to one of the foregoing claims, **characterized by** at least three wheels in form of a trike/three-wheeler, or by two transversely spaced wheels being two front wheels (14, 114) longitudinally spaced from at least one rear wheel.

15. A vehicle according to any preceding claim, **characterized by** the vehicle (10) has at least two different powertrains connected to at least two different wheels and the torque of each of these powertrains can be controlled independently from each other.

## Patentansprüche

1. Neigefahrzeug (10), aufweisend einen Rahmen (12), der zwischen mindestens zwei in Querrichtung zueinander beabstandeten Rädern (14, 114) frei in Querrichtung neigbar ist, mindestens ein verstellbares Dämpferelement (28, 30, 148) mit einstellbarer Dämpfungskraft, das zwischen dem Rahmen (12) und den beiden Rädern (14, 114) wirkverbunden ist, mindestens einen Sensor zum Erzeugen von Signalen, die eine Querneigung des Rahmens (12) relativ zu einer zentralen vertikalen Ebene des Fahrzeugs anzeigen, und einer Steuerung, die mit dem mindestens einen verstellbaren Dämpferelement (28, 30, 148) und dem mindestens einen Sensor kommuniziert, wobei die Steuerung so konfiguriert ist, dass sie die Querdämpfung durch das mindestens eine verstellbare Dämpferelement (28, 30, 148) gemäß den von dem mindestens einen Sensor erzeugten Signalen ändert, um dem Rahmen (12) durch die in dem Dämpferelement in der entgegengesetzten Richtung zur Dämpferbewegung erzeugte Kraft passiv Querneigungsstabilität zu verleihen, und wobei der mindestens eine Sensor ein Seitenwindsensor ist, **dadurch gekennzeichnet, dass** die Steuerung mit dem Bremssystem des Fahrzeugs verbunden ist, um den Bremsdruck durch Öffnen eines Bypassventils im Bremssystem oder durch Erhöhen des Bremsdrucks mit einer aktiven Pumpe zu ändern, und/oder die Steuerung mit einem Antriebsstrangsteuersystem des Fahrzeugs verbunden ist, um die Leistung und das Drehmoment, die vom Antriebsstrang an die Räder des Fahrzeugs (10) abgegeben werden, zu ändern.

2. Neigefahrzeug (10) nach Anspruch 1, **dadurch gekennzeichnet, dass** der Sensor ferner einen Neigungssensor, einen Neigungsgeschwindigkeitssensor, einen Fahrzeuggeschwindigkeitssensor, einen Lenkwinkelsensor, einen Lenkwinkelgeschwindigkeitssensor, einen Lenkwinkelbeschleunigungssensor oder eine Kombination dieser umfasst, wobei die Steuerung das Signal des Lenkwinkelgeschwindigkeitssensors oder des Lenkwinkelbeschleunigungssensors gegenüber allen anderen Sensoren vorrangig behandelt.

3. Neigefahrzeug (10) nach Anspruch 1 oder Anspruch 2, **dadurch gekennzeichnet, dass** eine Federungsvorrichtung (140) zwischen dem Rahmen (12) und einer Lenkvorrichtung (142) zum Lenken zweier in Querrichtung beabstandeter Fronträder (14, 114) angeordnet ist, wobei mindestens ein Heckrad in Längsrichtung davon beabstandet ist.

4. Fahrzeug nach Anspruch 3, **dadurch gekennzeichnet, dass** die Federungsvorrichtung (140) mindestens einen Stoßdämpfer mit einem geschlossenen Hydraulikregelkreis (32) umfasst, der ein elektrorheologisches Fluid oder ein magnetorheologisches Fluid und mindestens ein elektrorheologisches Ventil oder ein magnetorheologisches Ventil aufweist, das zwischen beiden Seiten eines Kolbens des mindestens einen Dämpferelements (28, 30, 148) oder einer mechanischen Sperrvorrichtung in hydraulischer Verbindung steht.

5. Neigefahrzeug (10) nach Anspruch 3 oder 4, ferner ein Quer-Neigegestänge (20) aufweisend, das zwischen dem Rahmen (12) und der Federungsvorrichtung (140) oder zwischen der Lenkvorrichtung (142) und der Federungsvorrichtung (140) angeordnet ist.

6. Neigefahrzeug (10) nach Anspruch 5, **dadurch gekennzeichnet, dass** die Lenkvorrichtung (142) bezüglich mindestens einem Querträger (146) neigbar angebracht ist, um ein Neigen des Fahrzeugs (10) zu ermöglichen, und dass der mindestens eine Querträger (146) zwischen den beiden Fronträdern (14, 114) und der Lenkvorrichtung (142) wirkverbunden ist, oder dass das Quer-Neigegestänge (20) einen oberen und unteren Querträger (22, 24) aufweist, die durch einen mittleren Verbindungssteg (26) gelenkig miteinander verbunden sind, wobei vorzugsweise der mittlere Verbindungssteg (26) einen Teil des Rahmens (12) oder einen Teil der Lenkvorrichtung (142) bildet und das Verbindungselement mit einem im Wesentlichen mittigen Abschnitt der jeweiligen Querträger (22, 24) verbunden ist und wobei vorzugsweise die Federungsvorrichtung (140) zwei quer zueinander beabstandete Federbeine (18) aufweist, die zwischen dem oberen und unteren Querträger (22, 24) und den beiden Fronträdern (14, 114) angeordnet sind.

7. Neigefahrzeug (10) nach Anspruch 6, **dadurch gekennzeichnet, dass** das mindestens eine verstellbare Dämpferelement (28, 30, 148) in Querrichtung zwischen einem Ende des mindestens einen Querträgers (146) und einem aus dem Rahmen (12), der Federungsvorrichtung (140) und der Lenkvorrichtung (142) angeordnet ist und dass vorzugsweise das mindestens eine verstellbare Dämpferelement (28, 30, 148) zwei in einer Zug-Druck-Beziehung stehende, in Querrichtung angeordnete verstellbare Unter-Dämpferelemente umfasst, wobei mindestens eines der beiden verstellbaren Unter-Dämpferelemente ein doppeltwirkender hydraulischer Dämpfer ist, wobei die beiden Seiten des Dämpferelements durch einen geschlossenen Hydraulikregelkreis in gegenseitiger Fluidverbindung steht, und der geschlossene Hydraulikregelkreis (32) zwei Zweiweg-Magnetventile (34, 36), die zwischen dem mindestens einen doppeltwirkenden hydraulischen Dämpferelement (28, 30, 148) in Fluidverbindung stehen, und ein Reservoir, das zwischen den beiden Zweiweg-Magnetventilen (34, 36) in Fluidverbindung steht, aufweist, wobei die Steuerung so konfiguriert ist, dass sie einen bidirektionalen Fluidstrom durch den Hydraulikregelkreis (32) steuert, und der geschlossene Hydraulikregelkreis (32) ein elektrorheologisches Fluid oder ein magnetorheologisches Fluid und mindestens ein elektrorheologisches Ventil oder mindestens ein magnetorheologisches Ventil aufweist, das zwischen beiden Seiten des mindestens einen Dämpferelements (28, 30, 148) in hydraulischer Verbindung steht.

8. Fahrzeug nach Anspruch 6, **dadurch gekennzeichnet, dass** das mindestens eine verstellbare Dämpferelement (28, 30, 148) in Querrichtung zwischen einem Ende des mindestens einen Querträgers (22, 24) und des mittleren Verbindungsstegs (26) angeordnet ist, und wobei das mindestens eine verstellbare Dämpferelement (28, 30, 148) zwei, in einer Zug-Druck-Beziehung stehende, in Querrichtung angeordnete verstellbare Unter-Dämpferelemente umfasst, und wobei die beiden verstellbaren Unter-Dämpferelemente einander zugewandte benachbarte Enden aufweisen, die an dem mittleren Verbindungssteg (26) angelenkt sind, und gegenüberliegende Enden, die an den einander gegenüberliegenden Enden des Querträgers (22, 24) angelenkt sind.

9. Fahrzeug nach Anspruch 8, **dadurch gekennzeichnet, dass** mindestens eines der beiden verstellbaren Unter-Dämpferelemente hydraulisch oder elektrisch betrieben wird und wobei vorzugsweise mindestens eines der beiden verstellbaren Unter-Dämpferelemente ein doppeltwirkender hydraulischer Dämpfer ist, der zwischen beiden Seiten des Dämpferelements durch einen geschlossenen Hydraulikregelkreis in gegenseitiger Fluidverbindung steht.

10. Fahrzeug nach Anspruch 9, **gekennzeichnet durch** einen geschlossenen Hydraulikregelkreis (32), der zwei Zweiweg-Magnetventile (34, 36), die zwischen dem mindestens einen doppeltwirkenden hydraulischen Dämpferelement (28, 30, 148) in Fluidverbindung stehen, und ein Reservoir, das zwischen den beiden Zweiweg-Magnetventilen (34, 36) in Fluidverbindung steht, aufweist, wobei die Steuerung vorzugsweise so konfiguriert ist, dass sie einen bidirektionalen Fluidstrom durch den Hydraulikregelkreis (32) steuert, und wobei vorzugsweise der geschlossene Hydraulikregelkreis (32) ein elektrorheologisches Fluid oder ein magnetorheologisches Fluid und mindestens ein elektrorheologisches Ventil oder mindestens ein magnetorheologisches Ventil aufweist, das zwischen beiden Seiten des mindestens einen Dämpferelements (28, 30, 148) in hydraulischer Verbindung steht.

11. Neigefahrzeug (10) nach einem der vorstehenden Ansprüche, **dadurch gekennzeichnet, dass** ein Lenkungsdämpfer innerhalb der Lenkvorrichtung (142) zwischen einem Lenkrad oder einer Lenkstange (16) der Lenkvorrichtung (142) und dem Rahmen (12) angebracht ist.

12. Neigefahrzeug (10) nach Anspruch 11, **dadurch gekennzeichnet, dass** der Lenkungsdämpfer vorzugsweise einen geschlossenen Hydraulikregelkreis (32) aufweist, der ein elektrorheologisches Fluid oder ein magnetorheologisches Fluid und mindestens ein elektrorheologisches Ventil oder ein magnetorheologisches Ventil aufweist, das zwischen beiden Seiten des mindestens einen Lenkungsdämpfers in hydraulischer Verbindung steht, wobei die Steuerung so konfiguriert ist, dass sie den bidirektionalen Fluidstrom durch den mindestens einen Lenkungsdämpfer durch Steuerung der Position des elektrorheologischen Ventils oder eines magnetorheologischen Ventils steuert, um dadurch die Lenkungsdämpfung zu ändern.

13. Neigefahrzeug (10) nach Anspruch 3, **dadurch gekennzeichnet, dass** eine Lenkvorrichtung (142) zwischen dem Rahmen (12) und zwei Fronträdern (14, 114) angeordnet ist, die Lenkvorrichtung (142) eine Lenksäule aufweist, die nach hinten geneigt ist, so dass ein oberes Ende der Lenksäule zur Frontseite des Fahrzeugs (10) zeigt.

14. Neigefahrzeug (10) nach einem der vorstehenden Ansprüche, **gekennzeichnet durch** mindestens drei Räder in Form eines Trikes/Dreirades oder durch zwei in Querrichtung zueinander beabstandete Räder, wobei zwei Fronträder (14, 114) in Längsrichtung von mindestens einem Heckrad beabstandet sind.

15. Fahrzeug nach einem der vorstehenden Ansprüche, **dadurch gekennzeichnet, dass** das Fahrzeug (10) mindestens zwei verschiedene Antriebsstränge aufweist, die mit mindestens zwei verschiedenen Rädern verbunden sind, und das Drehmoment eines jeden dieser Antriebsstränge unabhängig voneinander gesteuert werden kann.

## Revendications

1. Véhicule inclinable (10) comprenant un cadre (12) librement inclinable transversalement entre au moins deux roues espacées transversalement (14, 114), au moins un amortisseur (28, 30, 148) réglable à force d'amortissement ajustable fonctionnellement relié entre le cadre (12) et les deux roues (14, 114), au moins un capteur conçu pour générer des signaux indiquant une inclinaison transversale du cadre (12) par rapport à un plan vertical central du véhicule, ainsi qu'une unité de commande en communication avec l'au moins un amortisseur (28, 30, 148) réglable et l'au moins un capteur, dans lequel l'unité de commande est configurée pour faire varier un amortissement transversal par l'au moins un amortisseur (28, 30, 148) réglable en fonction des signaux générés par l'au moins un capteur afin d'assurer de manière passive une stabilité d'inclinaison transversale au cadre (12) par la force générée dans l'amortisseur dans la direction opposée au déplacement de l'amortisseur, et dans lequel l'au moins un capteur est un capteur de vent latéral, **caractérisé en ce que** l'unité de commande est raccordée au système de freinage du véhicule de façon à faire varier une pression de freinage en ouvrant une vanne de dérivation dans le système de freinage ou en augmentant la pression de freinage à l'aide d'une pompe active et/ou l'unité de commande est raccordée à un système de commande du groupe motopropulseur du véhicule de façon à faire varier une puissance et un couple délivrés par le groupe motopropulseur aux roues du véhicule (10).

2. Véhicule inclinable (10) selon la revendication 1, **caractérisé en ce que** ledit capteur comprend en outre un capteur d'inclinaison, un capteur de vitesse d'inclinaison, un capteur de vitesse de véhicule, un capteur d'angle de direction, un capteur de vitesse d'angle de direction, un capteur d'accélération d'angle de direction ou une combinaison de ces capteurs, l'unité de commande accordant une plus grande priorité au signal en provenance du capteur de vitesse d'angle de direction ou du capteur d'accélération d'angle de direction qu'à un signal en provenance d'un quelconque autre capteur.

3. Véhicule inclinable (10) selon la revendication 1 ou la revendication 2, **caractérisé en ce qu'**un dispositif de suspension (140) est disposé entre le cadre (12) et un dispositif de direction (142) pour diriger deux roues avant espacées transversalement (14, 114), sachant qu'au moins une roue arrière est espacée longitudinalement de celles-ci.

4. Véhicule selon la revendication 3, **caractérisé en ce que** le dispositif de suspension (140) comprend au moins un absorbeur de chocs présentant un circuit hydraulique en boucle fermée (32) qui contient un fluide électrorhéologique ou un fluide magnétorhéologique et au moins une vanne électrorhéologique ou une vanne magnétorhéologique raccordée hydrauliquement entre les deux côtés d'un piston de l'au moins un amortisseur (28, 30, 148) ou d'un dispositif de verrouillage mécanique.

5. Véhicule inclinable (10) selon la revendication 3 ou 4, comprenant en outre une tringlerie d'inclinaison transversale (20) située entre le cadre (12) et le dispositif de suspension (140) ou entre le dispositif de direction (142) et le dispositif de suspension (140).

6. Véhicule inclinable (10) selon la revendication 5, **caractérisé en ce que** le dispositif de direction (142) est monté de manière inclinable par rapport à au moins un bras transversal (146) de façon à permettre une inclinaison du véhicule (10), et l'au moins un bras transversal (146) est fonctionnellement raccordé entre les deux roues avant (14, 114) et le dispositif de direction (142), ou la tringlerie d'inclinaison transversale (20) comprend des bras transversaux supérieur et inférieur (22, 24) articulés ensemble par un élément de liaison central (26), sachant que l'élément de liaison central (26) forme de préférence une partie du cadre (12) ou une partie de le dispositif de direction (142) et l'élément de liaison est raccordé à une partie globalement centrale de chaque bras transversal (22, 24), et sachant que le dispositif de suspension (140) comporte de préférence deux jambes de suspension espacées transversalement (18) disposées entre les bras transversaux supérieur et inférieur (22, 24) et les deux roues avant (14, 114).

7. Véhicule inclinable (10) selon la revendication 6, **caractérisé en ce que** l'au moins un amortisseur (28, 30, 148) réglable est disposé transversalement entre une extrémité de l'au moins un bras transversal (146) et un quelconque élément parmi le cadre (12), le dispositif de suspension (140) et le dispositif de direction (142), et l'au moins un amortisseur (28, 30, 148) réglable comporte de préférence deux sous-amortisseurs réglables disposés transversalement en une relation pousseur-tireur, sachant qu'au moins un des deux sous-amortisseurs réglables est un amortisseur hydraulique à double action raccordé en communication fluidique entre les deux côtés de l'amortisseur par un circuit hydraulique en boucle fermée et le circuit hydraulique en boucle fermée (32) comprend deux électrovannes à deux voies (34, 36) raccordées en communication fluidique entre l'au moins un amortisseur hydraulique à double action (28, 30, 148) et un réservoir raccordé en communication fluidique entre les deux électrovannes à deux voies (34, 36), sachant que l'unité de commande est configurée pour commander un flux de fluide bidirectionnel à travers le circuit hydraulique (32) et le circuit hydraulique en boucle fermée (32) contient un fluide électrorhéologique ou un fluide magnétorhéologique et au moins une vanne électrorhéologique ou au moins une vanne magnétorhéologique raccordée hydrauliquement entre les deux côtés de l'au moins un amortisseur (28, 30, 148).

8. Véhicule selon la revendication 6, **caractérisé en ce que** l'au moins un amortisseur (28, 30, 148) réglable est disposé transversalement entre une extrémité de l'au moins un bras transversal (22, 24) et l'élément de liaison central (26), et sachant que l'au moins un amortisseur (28, 30, 148) réglable comporte deux sous-amortisseurs réglables disposés transversalement en une relation pousseur-tireur et sachant que les deux sous-amortisseurs réglables présentent des extrémités adjacentes se faisant face articulées par rapport à l'élément de liaison central (26) et des extrémités opposées articulées par rapport aux extrémités opposées du bras transversal (22, 24).

9. Véhicule selon la revendication 8, **caractérisé en ce qu'**au moins un des deux sous-amortisseurs réglables est actionné de manière hydraulique ou électrique, sachant qu'au moins un des deux sous-amortisseurs réglables est de préférence un amortisseur hydraulique à double action raccordé en communication fluidique entre les deux côtés de l'amortisseur par un circuit hydraulique en boucle fermée.

10. Véhicule selon la revendication 9, **caractérisé en ce qu'**un circuit hydraulique en boucle fermée (32) comporte deux électrovannes à deux voies (34, 36) raccordées en communication fluidique entre l'au moins un amortisseur hydraulique à double action (28, 30, 148) et un réservoir raccordé en communication fluidique entre les deux électrovannes à deux voies (34, 36), sachant que l'unité de commande est de préférence configurée pour commander un flux de fluide bidirectionnel à travers le circuit hydraulique (32) et sachant que le circuit hydraulique en boucle fermée (32) contient de préférence un fluide électrorhéologique ou un fluide magnétorhéologique et au moins une vanne électrorhéologique ou au moins une vanne magnétorhéologique raccordée hydrauliquement entre les deux côtés de l'au moins un amortisseur (28, 30, 148).

11. Véhicule inclinable (10) selon l'une quelconque des précédentes revendications, **caractérisé en ce qu'**un amortisseur de direction est monté dans le dispositif de direction (142) entre un volant ou un guidon (16) du dispositif de direction (142) et le cadre (12).

12. Véhicule inclinable (10) selon la revendication 11, **caractérisé en ce que** l'amortisseur de direction présente de préférence un circuit hydraulique en boucle fermée (32) qui contient un fluide électrorhéologique ou un fluide magnétorhéologique et au moins une vanne électrorhéologique ou une vanne magnétorhéologique raccordée hydrauliquement entre les deux côtés de l'au moins un amortisseur de direction, sachant que l'unité de commande est configurée pour commander un flux de fluide bidirectionnel à travers l'au moins un amortisseur de direction en commandant la position de la vanne électrorhéologique ou d'une vanne magnétorhéologique de manière à faire varier ainsi un amortissement de direction.

13. Véhicule inclinable (10) selon la revendication 3, **caractérisé par** un dispositif de direction (142) disposé entre le cadre (12) et les deux roues avant (14, 114), le dispositif de direction (142) comportant une tige de direction qui est inclinée vers l'arrière de telle sorte qu'une extrémité supérieure de la tige de direction est disposée vers l'avant du véhicule (10).

14. Véhicule inclinable (10) selon l'une quelconque des précédentes revendications, **caractérisé par** au moins trois roues configurées en forme d'un tricycle ou « trike » ou par deux roues espacées transversalement constituant deux roues avant (14, 114) espacées longitudinalement d'au moins une roue arrière.

15. Véhicule selon l'une quelconque revendication précédente, **caractérisé en ce que** le véhicule (10) a au moins deux groupes motopropulseurs différents reliés à au moins deux roues différentes et le couple de chacun de ces groupes motopropulseurs peut être commandé indépendamment l'un de l'autre.
